# EUROPEAN PATENT SPECIFICATION

(11) **EP 3 922 911 B1**
(45) Date of publication and mention of the grant of the patent: **07.06.2023**
(21) Application number: 20922471.6
(22) Date of filing: 17.11.2020
(51) Int. Cl.: C10G 1/00, C10G 11/20, F23G 5/027, F23G 5/033, F23G 5/30, F23G 7/12, C10G 1/10

(54) **METHOD FOR EMBEDDING WASTE-PLASTIC OILIFICATION TECHNOLOGY IN GARBAGE INCINERATION**
VERFAHREN ZUR EINBETTUNG EINER VERÖLUNGSTECHNOLOGIE FÜR ABFALLKUNSTSTOFFE IN DER MÜLLVERBRENNUNG
PROCÉDÉ D'INCORPORATION D'UNE TECHNOLOGIE DE TRANSFORMATION DE DÉCHETS PLASTIQUES EN HUILE DANS LE CADRE D'INCINÉRATION D'ORDURES

(30) Priority: 29.05.2020 CN 202010479658
(43) Date of publication of application: 15.12.2021
(73) Proprietor: Zhejiang Comy Environment Technology Co., Ltd, Zhejiang 315100 (CN)
(72) Inventor: XIN, Benen, Zhejiang 315100 (CN); YE, Zongjun, Zhejiang 315100 (CN); CAO, Weimin, Zhejiang 315100 (CN)
(74) Representative: De Arpe Tejero, Manuel
(86) International application number: PCT/CN2020/129245
(87) International publication number: WO 2021/174911

(56) References cited:
- EP-A1- 1 268 708
- WO-A1-2017/103022
- WO-A2-94/17332
- CN-A- 1 080 312
- CN-A- 1 144 229
- CN-A- 106 190 213
- CN-A- 110 848 697
- CN-A- 111 750 358

## Description

### Technical field

The present invention relates to the technical field of solid waste disposal, and particularly relates to a waste incineration method embedded with a green technology for converting waste plastics to oil.

### Background Art

Plastic is widely used in various industries including, for example, textile industry, household appliance industry, building industry, automobile industry, agriculture, and the like. Waste plastics continuously increase with increasing consumption of plastic products. At present, the waste plastics in China mainly include plastic films, plastic wires, woven products, foamed plastics, plastic packing cases and containers, daily plastic products, plastic bags, agricultural mulching films, and the like.

A prominent problem in plastic recycling, as compared to metal recycling, is the difficulty in automated sorting them by machine. Thus, the process involves a lot of manpower. The recycling and utilization rate of plastic is generally low, which causes a huge waste of resources. Meanwhile, if the garbage, generated by the use of a large number of plastic products, is treated by methods such as burying, incineration, and the like, it will cause serious environmental pollution problems.

CN1144229A discloses a method and device for producing gasoline, kerosene and diesel oil by using waste plastics, wherein the method includes four continuous production processes of plastics breaking, metering and feeding; low-temp. melting and gasifying; gas-solid phase catalytic cracking; and rectifying, separating and condensing.

WO2017/103022A1 discloses a process for producing waxes and liquid fuels from waste plastic, wherein the process comprising the steps of subjecting the waste plastic to a dry pretreatment, and subsequently subjecting the pretreated waste plastic to cracking.

EP1268708A1 discloses a method and system for the continuous preparation of gasoline, kerosene, and diesel oil from waste plastics, wherein the method comprises the steps of: subjecting a melt of the waste plastics to a first catalytic reaction in which the waste plastic melt is in contact with a nickel or nickel alloy catalyst to be dehydrogenated while being decomposed; subjecting the dehydrogenated and decomposed waste plastic melt to a fluid catalytic cracking, as a second catalytic reaction to produce a gasoline-based fraction at a high fraction; fractionating the cracked material into a gasoline-based fraction, a kerosene fraction, and a diesel oil fraction; and reforming the gasoline-based fraction to produce a high octane number gasoline.

In view of the above, it is desirable to provide a waste plastics disposal method with high social and economic benefits.

### Summary

In view of the above shortcomings in the prior art, the major objective of the present invention is to provide a waste incineration method embedded with a green technology for converting waste plastics to oil, so as to solve the problem of low social and economic benefits in the existing waste incineration process.

To achieve the above objective, the present invention adopts the following technical solution.

In a first aspect, the present invention provides a waste incineration method embedded with a green technology for converting waste plastics to oil as defined in claim 1.

In the waste incineration method of the present invention, non-plastic wastes are still disposed in the original incineration way. However, because the waste plastics are not incinerated in an incinerator any more, and the incinerator does not require a temperature of more than 800°C any more, the quantity of dioxins generated is extremely low during the incineration process. Therefore, dry waste is divided into two parts, namely, waste plastics and non-plastic wastes. The waste plastics are disposed by a technology for converting waste plastics to oil, and the non-plastic wastes are disposed by incineration. As such, after dry waste is completely disposed, the total emission of dioxins can be drastically decreased, and is far below the standard value.

Main components of waste plastics are polyethylene (PE), polypropylene (PP), polystyrene (PS), foamed polystyrene (PSF), polyvinyl chloride (PVC) and the like. Since, plastics are the products from petrochemical industry, from the view of chemical structure and components, plastics are high-molecular hydrocarbons, while gasoline and diesel are low-molecular hydrocarbons. Therefore, waste plastics may be disposed and converted into fuel oil.

As a preferred technical solution, in the step S1, a filter element is arranged in the intermediate section of the first pretreatment tank, and a main body of the first pretreatment tank is further provided with an inert heating medium inlet, an inert heating medium outlet, a liquid outlet and a solid outlet. The inert heating medium inlet and the inert heating medium outlet are respectively arranged at the bottom and top of the first pretreatment tank for admission and discharge of superheated steam. The scraps of the waste plastics are heated to be melted into liquefied products. And the liquefied products, after being filtered by the filter element, collect at the bottom of the first pretreatment tank, and are then discharged from the liquid outlet. Meanwhile, non-liquefied non-plastic wastes are held in an upper space of the filter element and transferred to the purging-washing tank through the solid outlet.

As a preferred technical solution, in the step S1, the waste plastics are heated to be melted into liquefied products under the following operating conditions: the temperature is 100-300°C and the pressure is 0.01-0.5 MPa.

As a preferred technical solution, in the step S 1, the non-liquefied non-plastic wastes are directly pushed to the purging-washing tank to purge and wash the residual liquefied products of the waste plastics on the non-plastic wastes, wherein the purging-washing medium is a mixture of steam and hot water. The washing process is cycled and repeated. And, the hot water is from an aqueous phase material separated from a first three-phase separator. The washed liquefied products of the waste plastics collect at the top of the purging-washing tank, whereas the non-plastic wastes are held in a lower middle portion of the purging-washing tank.

The non-liquefied non-plastic wastes are continuously or discontinuously discharged from the first pretreatment tank, wherein the discharging way is pushing by an airtight pipeline. Furthermore, a material level monitoring instrument is disposed within the first pretreatment tank. When a first pretreatment tank is individually arranged, the non-liquefied non-plastic wastes are discontinuously discharged from the first pretreatment tank. In the case that a plurality of the same specification of first pretreatment tanks are arranged in a parallel mode, the first pretreatment tanks are switched when the material level monitoring instrument disposed within the first pretreatment tank detects that the non-plastic wastes are accumulated to a certain material level. As such, the non-liquefied non-plastic wastes are discharged from the first pretreatment tanks in a continuous mode.

As a preferred technical solution, in the step S1, before the shredding treatment, the dry waste is subjected to a preliminary screening treatment to a certain extent so as to eliminate solid wastes comprising irons, batteries, glasses, and rocks in the dry waste.

Specifically, iron may be removed by using a pipeline iron remover known in the art. Alternatively, solid wastes, such as batteries, glasses, and rocks, in dry waste may be removed by manual picking or intelligent identification.

Shredding treatment of dry waste mainly refers to shredding the waste plastics in dry waste. Waste plastics are shredded into scraps with moderate size and uniform distribution, which is beneficial to improving the heating and melting effects of the waste plastics. Furthermore, it should be understood that for the shredding operation of waste plastics in dry waste, waste plastic products with different properties may be disposed by different shredding devices. For example, soft plastics such as films and packaging bags can be shredded by a shredder, whereas hard plastics such as housings or shells of electrical appliances can be crushed by a crusher.

As a preferred technical solution, the superheated steam in the steps S1 and S2 has a temperature of 200-500°C and a pressure of 0.2-0.5 MPa.

As a preferred technical solution, in the step S2, the second pretreatment tank is divided into a preheating section and a desuperheating section. The specific operating procedure for preheating the liquefied products of the waste plastics by the second pretreatment tank are as follows. The liquefied products of the waste plastics from the first pretreatment tank are pumped into an upper portion of the preheating section of the second pretreatment tank via a pump, wherein the liquefied products of the waste plastics flowing downwardly are counter-currently contacted and heat-exchanged with the high temperature oil and gas from the catalytic cracking reactor in the second pretreatment tank. After the liquefied products of the waste plastics flow through the preheating section and the desuperheating section, the temperature thereof is increased plate by plate, and is increased to 250-320°C when the liquefied products of the waste plastics reach a column kettle. A portion of the preheated liquefied products of the waste plastics are transferred into the catalytic cracking reactor for catalytic cracking operation after passing through the mixer, whereas another portion of the preheated liquefied products of the waste plastics are recycled and returned to the first pretreatment tank for preheating fresh dry waste. In the desuperheating section, the high temperature oil and gas is cooled to a saturation state from a superheat state, and at this time, the dust carried by the oil and gas is washed off. The temperature at the top of the column of the second pretreatment tank is 100-200°C, and the pressure at the top of the column of the second pretreatment tank is 0.05-0.30 MPa. Furthermore, the temperature of the column kettle temperature is 250-320°C.

As a preferred technical solution, the operating procedure of cooling and separating the high temperature oil and gas is specifically as follows. The high temperature oil and gas from the catalytic cracking reactor are counter-currently contacted and heat-exchanged with the liquefied products of the waste plastics in the second pretreatment tank. The heat-exchanged high temperature oil and gas is discharged from the top of the column of the second pretreatment tank. Then, the discharged high temperature oil and gas is cooled to 70-90°C by exchanging heat between the discharged high temperature oil and gas and an aqueous phase material separated from a first three-phase separator in a first heat exchanger, and is further cooled to 30-50°C via a first cooler. The cooled high temperature oil and gas is then transferred into the first three-phase separator for separating operation so as to obtain three streams of materials respectively comprising oil-phase gasoline and diesel, gas-phase hydrocarbon gases, and an aqueous phase material. The gas-phase hydrocarbon gases are transferred to the incinerator after being pressurized by a compressor. The aqueous phase material is converted into superheated steam by successively preheated by the first heat exchanger and heated by a heater. A portion of the superheated steam stream is fed into a mixer and mixed with the liquefied products of the waste plastics, and then transferred into a catalytic cracking reactor, whereas another portion of the superheated steam is fed into a catalyst regenerator for the activity recovery operation of the catalyst.

As a preferred technical solution, in the step S2, operating conditions of the catalytic cracking reactor are as follows: the reaction temperature is 300-500°C, the reaction pressure is 0.05-0.5 MPa, and the space speed is 0.1-20 h⁻¹.

The catalytic cracking reactor operates in a moderate reaction condition, wherein air is insulated and no oxygen is contacted. In the presence of a catalyst, most of chlorine in the waste plastics are converted into hydrogen chloride. Therefore, the dioxins emission is far below the standard value during the process of converting the waste plastics to oil.

The catalytic cracking reactor is selected from a fixed fluidized bed or a fluidized bed. A suitable type of a reactor is selected according to the treatment size. When a fluidized bed reactor is selected, the recycling of concomitant gases, namely the hydrocarbon gases, need to be further taken into consideration. When a fixed fluidized bed is selected, concomitant gases are generally selected as fuel gases of the incinerator. In addition, the waste residue discharged from the catalytic cracking reactor may also be optionally transferred to the incinerator for incineration, and coke in the waste residue may be further converted into CO₂ and H₂O.

As a preferred technical solution, in the step S3, the washed non-plastic wastes are directly pushed to an incinerator by the purging-washing tank, wherein the discharging way is pushing by an airtight pipeline. Furthermore, the purging-washing tank is provided with a liquid level monitoring instrument and a material level monitoring instrument.

The non-plastic wastes are directly pushed to the incinerator without cooling. Direct supplying of materials between upstream and downstream equipment is beneficial to the maximum utilization of energy. Compared with the original direct incineration of the dry waste (heating up to 850°C from room temperature), the energy consumption required by the incineration of non-plastic wastes does not increase except that the process of converting waste plastics to oil increases some energy consumption. On the contrary, the energy consumption required by the incineration of non-plastic wastes decreases only (heating up to 200-400°C from room temperature, and to the ignition point from 200-400°C, wherein the ignition temperature is obviously lower than 850°C).

As a preferred technical solution, in the step S3, operating conditions of the incinerator working in the direct combustion way are as follows: the operating temperature is an ignition temperature of the dry refuse, namely, 400-600°C, and the pressure is 0.01-0.5 MPa. Oxygen is fed into the incinerator, and non-plastic wastes are completely incinerated and converted into carbon dioxide and water to discharge.

As a preferred technical solution, in the step S3, operating conditions of the incinerator working in the indirect combustion way are as follows: the operating temperature is 400-650°C and the pressure is 0.1-0.5 MPa. The non-plastic wastes in the incinerator are carbonized and converted into coke under anaerobical and high temperature conditions, wherein the coke is converted into carbon dioxide and water after combustion, and the carbonization process is performed in a mechanical grate incinerator or a fluidized bed incinerator.

When the carbonization process is performed in a mechanical grate incinerator, the carbonization medium uses a high-temperature inert medium, and the high-temperature inert medium is selected from at least one of superheated steam, carbon dioxide or nitrogen. The high-temperature inert medium has a temperature of 400-600°C and a pressure of 0.2-0.5 MPa. In the mechanical grate incinerator, non-plastic materials are subjected to three processes of drying, evaporation and carbonization. After being carbonized, the non-plastic materials are transferred together with slags to an incinerator for incineration or separately transferred to an incinerator for incineration after being sieved. In addition, the heat released from the incineration process is used to provide energy for the superheated steam. Heat is required during carbonization of the non-plastic wastes, whereas the carbonized coke releases heat in the incineration process, maintaining a heat balance therebetween.

When the carbonization process is performed in a fluidized bed incinerator, the fluidized bed incinerator is loaded with a catalyst, and the non-plastic wastes and the catalyst are mixed and reacted fluidly. The superheated steam and a high-temperature catalyst are used as the carbonization medium, wherein the superheated steam has a temperature of 400-600°C and a pressure of 0.2-0.5 MPa, and the high-temperature catalyst has a temperature of 450-650°C, and the fluidized bed has a pressure of 0.1-0.5 MPa. The carbonized coke and cooled catalyst are together transferred to a regenerative fluidized bed, wherein the coke is combusted in the regenerative fluidized bed and converted into CO₂ and H₂O. The heat released during the combustion process heats the catalyst and superheated steam.

During the carbonization process, oxygen is insulated, and the cracking reaction of carbon is performed at high temperature. As such, combustion reaction under aerobic conditions is not performed, and thus there is no problem of insufficient combustion of non-plastic materials. Furthermore, the carbonization process has the following significant advantages: 1) the quantity of dioxins produced in the incineration process is further decreased; 2) the furnace temperature or bed layer temperature decreases sharply; 3) the blast consumption is obviously decreased, and the dust contained in the flue gas and acid gas concentration are decreased by different extents; and 4) the subsequent environmental protection facilities of the incinerator are simpler, and thus the captial and running cost is lower.

As a preferred technical solution, in the step S2, the method further includes a regeneration process of the catalyst, which mainly includes the following steps of: separating the catalyst from the catalytic cracking reactor via a catalyst-unloading line, wherein the catalyst collects into the buffer tank and the buffer tank is fed with steam for steam stripping to eliminate oil and gas carried by the catalyst; then, transferring the catalyst to a regenerator, wherein an overheated medium and a suitable amount of air are fed into the regenerator to convert the carbon deposited on the catalyst into CO₂ and H₂O, such that the activity of the catalyst is recovered gradually; transferring the regenerated catalyst to a catalyst-loading tank above the catalytic cracking reactor and, after the regenerated catalyst is transferred completely, increasing the pressure in the catalyst-loading tank to be higher than the pressure of 0.1-0.2 MPa in the catalytic cracking reactor, wherein, under the action of differential pressure and gravity, the catalyst is transferred into the catalytic cracking reactor once again.

After the catalytic cracking reaction is performed for a period of time, the catalyst is deactivated due to carbon deposition thereon and thus is regenerated at this time. The regenerated catalyst may be reused, and the catalyst may be recycled repeatedly. The heat source for regeneration may be an overheated medium, such as steam and nitrogen. The overheated medium may be fed with a certain amount of air during regeneration. When a fluidized bed is selected as the catalytic cracking reactor, the catalyst is recycled between the reactor and the regenerator, and air is directly fed into the regenerator.

### Technical effects of the present invention:

The waste incineration method of the present invention may completely separate waste plastics from non-plastic wastes in dry waste. The waste plastics are disposed by a technology for converting waste plastics to oil, and the total yield of the obtained gasoline and diesel is 20-40m% of the dry waste. Meanwhile, the non-plastic wastes are incinerated, and the emission value of dioxins produced by incineration is far below the standard value.

Compared with the operating temperature (greater than 800°C) of the existing incinerator, the waste incinerator of the present invention has moderate operating conditions, and only requires a temperature of 400-600°C to satisfy the waste incineration requirement. As a result, the equipment and running cost is greatly saved, which brings remarkable economic and social benefits.

In the waste incineration method of the present invention, the concomitant hydrocarbon gases and waste residue in the catalytic cracking process of waste plastics may serve as fuels of an incinerator; thereby no fuel is needed to be additionally added in the waste incineration process for incineration. Hence, the waste incineration method of the present invention has the advantages of comprehensive recycle and reuse of by-products and low running cost.

The waste incineration method of the present invention not only has low overall energy consumption, but also further reduces the equipment investment and running cost through the comprehensive utilization of heat.

### Brief Description of the Drawings

FIG. 1 shows a process flow diagram of a waste incineration method embedded with a green technology for converting waste plastics to oil of the present invention in Example 1;
FIG. 2 shows a process flow diagram of a waste incineration method embedded with a green technology for converting waste plastics to oil of the present invention in Example 2;

In the figures, the references are as follows: 1-conveyor belt, 2-pipeline iron remover, 3-shredder, 4-screw pusher, 5-first pretreatment tank, 6-second pretreatment tank, 7-catalytic cracking reactor, 8-purging-washing tank, 9-incinerator, 10 first three-phase separator, 11-compressor, 12-mixer, 13- first heat exchanger, 14 first cooler, 15-heater, 16-buffer tank, 17-regenerator, 18-catalyst-loading tank, 19-two phase separator, 20-second heat exchanger, 2-second cooler, 22-water pump, 51-first liquefied product pump, 61 -second liquefied product pump, 62-first circulating pump, and 81-second circulating pump.

### Detailed Embodiments of the Invention

The following description is used to disclose the present invention such that a person skilled in the art can implement the present invention. Preferred embodiments in the following description are merely examples. Thereby, a person skilled in the art may envisage other apparent variations.

### Example 1

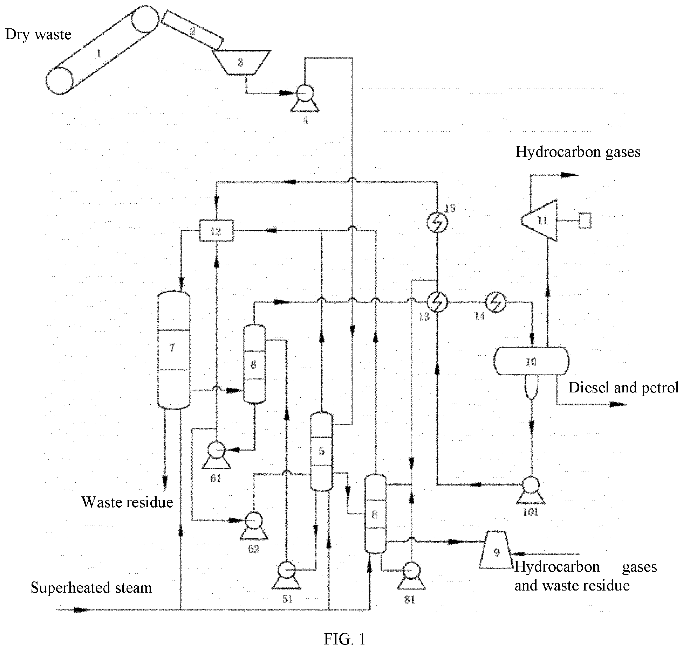

As shown in FIG. 1, the waste incineration method embedded with a green technology for converting waste plastics to oil of this example includes the following steps:

S 1 operations in a pretreatment unit for dry waste: the dry waste (water content was less than 15%) obtained by separating dry and wet wastes was transferred by a conveyor belt 1; during such process, bulk batteries, glasses, rocks and other solid wastes were removed by a way of manual picking; and then, iron blocks in the dry waste were removed by a pipeline iron remover 2; after being subjected to a shredding treatment by a shredder 3, the dry waste was transferred to an intermediate section of a first pretreatment tank 5 by a screw pusher 4, wherein the dry waste included waste plastics and non-plastic wastes, and the waste plastics accounted for a weight ratio of 42m% in the dry waste; the waste plastics mainly comprised soft plastic such as plastic films and plastic packing bags, and the non-plastic wastes mainly referred to kitchen wastes, woody/bamboo wastes, paper wastes, textile wastes, metal wastes, glass wastes, brick/tile/ceramic wastes, dust wastes and other wastes (such as battery); by using superheated steam, the waste plastics in the first pretreatment tank 5 were melted into liquefied products, which collected at the bottom of the tank; the waste plastics were heated to be melted into liquefied products under the following operating conditions: the temperature was 250°C and the pressure was 0.2 MPa; the non-plastic wastes were held in the intermediate section of the first pretreatment tank 5 in a solid form; the non-plastic wastes were transferred to a purging-washing tank 8 when the non-plastic wastes were accumulated to a certain material level, and the residual liquefied products on the non-plastic wastes were washed by using steam and hot water; and the steam from both of the first pretreatment tank 5 and the purging-washing tank 8 were introduced into a catalytic cracking reactor 7 in a state of gaseous phase;

a filter element was arranged in the intermediate section of the first pretreatment tank 5, and a main body of the first pretreatment tank 5 was further provided with an inert heating medium inlet, an inert heating medium outlet, a liquid outlet and a solid outlet; the inert heating medium inlet and the inert heating medium outlet were respectively arranged at the bottom and top of the first pretreatment tank 5 for admission and discharge of superheated steam; scraps of the waste plastics were heated to be melted into liquefied products, wherein the liquefied products, after being filtered by the filter element, collected at the bottom of the first pretreatment tank 5, and could be discharged through the liquid outlet; the non-liquefied non-plastic wastes were held in an upper space of the filter element and transferred to the purging-washing tank 8 through the solid outlet;

the non-liquefied non-plastic wastes were directly pushed to the purging-washing tank 8 to purge and wash the residual liquefied products of the waste plastics on the non-plastic wastes, wherein the purging-washing medium was a mixture of steam and hot water, and the washing process was cycled and repeated through a first circulating pump 62; the hot water was from an aqueous phase material separated from a first three-phase separator 10; the washed liquefied products of the waste plastics collected at the top of the purging-washing tank 8; and the non-plastic wastes were held in a lower middle portion of the purging-washing tank 8; the non-liquefied non-plastic wastes were discontinuously discharged from the first pretreatment tank 5, wherein the discharging way is pushing by an airtight pipeline, and the purging-washing tank 5 was provided with a material level monitoring instrument;

S2 operations in a cracking unit for liquefied waste plastics: the liquefied products of the waste plastics obtained in the step S1 were pumped out by a first liquefied product pump 51 after being preheated by a second pretreatment tank 6, and the pumped liquefied products of the waste plastics were mixed with superheated steam in a mixer 12 before a catalytic cracking reactor 7; Then, the well-mixed liquefied products of the waste plastics and superheated steam were transferred into the catalytic cracking reactor 7, wherein the liquefied products of the waste plastics were converted into a waste residue and high temperature oil and gas having a temperature of 400°C in the presence of a catalyst; the high temperature oil and gas was cooled and separated to obtain diesel, gasoline and other oil-phase components, and to produce a certain amount of hydrocarbon gases at the same time; the catalytic cracking reactor 7 was selected from a solid fluidized bed, wherein the filled catalyst was a catalyst compounded by a Y type molecular sieve and a shape selective molecular sieve at a mass ratio of 5:1; the operating conditions of the catalytic cracking reactor 7 were as follows: the reaction temperature was 400°C, the reaction pressure was 0.2 MPa, and the space speed was 10 h⁻¹;
the second pretreatment tank 6 was divided into a preheating section and a desuperheating section; the specific operating procedure for preheating the liquefied products of the waste plastics by the second pretreatment tank 6 were as follows: the liquefied products of the waste plastics from the first pretreatment tank 5 were pumped into an upper portion of the preheating section of the second pretreatment tank 6 via a first liquefied product pump 51, and the liquefied products of the waste plastics flowing downwardly were counter-currently contacted and heat-exchanged with the 400°C high temperature oil and gas from the catalytic cracking reactor 7 in the second pretreatment tank 6; after the liquefied products of the waste plastics flowed through the preheating section and the desuperheating section, the temperature thereof increased plate by plate, and increased to 280°C when the liquefied products of the waste plastics reached a column kettle; a portion of the preheated liquefied products of the waste plastics were transferred into the catalytic cracking reactor 7 via a first liquefied product pump 51 for catalytic cracking operation after passing through the mixer 12, and another portion of the preheated liquefied products of the waste plastics were recycled and returned via a first circulating pump 62 to the first pretreatment tank 5 for preheating fresh dry waste; in the desuperheating section, the high temperature oil and gas was cooled to a saturation state from a superheat state, and at this time, dust carried by the oil and gas was washed off; the temperature at the top of the second pretreatment tank 6 was 200°C, and the pressure at the top of the second pretreatment tank 6 0.15 MPa. Furthermore, the temperature at the column kettle is 280°C;
the operating procedure of cooling and separating the high temperature oil and gas was specifically as follows: the high temperature oil and gas from the catalytic cracking reactor 7 were counter-currently contacted with the liquefied products of the waste plastics in the second pretreatment tank 6 for heat exchange, wherein the heat-exchanged 200°C high temperature oil and gas was discharged from the top of the column of the second pretreatment tank 6; then, the discharged high temperature oil and gas was cooled to 80°C by exchanging heat between the discharged high temperature oil and gas and an aqueous phase material separated from a first three-phase separator 10 in a first heat exchanger 13, and the same was cooled to 40°C via a first cooler 14; the cooled high temperature oil and gas was transferred into the first three-phase separator 10 for separation operation, obtaining three streams of materials respectively comprising oil-phase gasoline and diesel, gas-phase hydrocarbon gases, and an aqueous phase material; the gas-phase hydrocarbon gases were transferred to the incinerator 9 after being pressurized by a compressor 11; the aqueous phase material was successively preheated by the first heat exchanger 13 and heated by a heater 15, and then converted into superheated steam having a temperature of 500°C; a portion of the superheated steam was fed into the mixer 12 and mixed with the liquefied products of the waste plastics, and then transferred into the catalytic cracking reactor 7, whereas another portion of the superheated steam was fed into a catalyst regenerator 17 for the activity recovery operation of the catalyst;
S3 operations in an incineration unit for non-plastic wastes: the clean non-plastic wastes washed in the step S1 were directly pushed to the incinerator 9 without cooling; the concomitant hydrocarbon gases and the waste residue in the step S2 served as fuels of the incinerator 9 for combustion; the incinerator 9 incinerated the non-plastic wastes in a direct combustion way, wherein the operating conditions were as follows: the temperature was an ignition temperature of the dry refuse, namely, 500°C, and the pressure was 0.2 MPa; a suitable amount of air was fed into the incinerator in the incineration process, and the non-plastic wastes were completely incinerated and converted into carbon dioxide and water to discharge.

The washed non-plastic wastes were directly pushed to the incinerator 9 by the purging-washing tank 8, and the discharging way was pushing by an airtight pipeline; the purging-washing tank 8 was provided with a liquid level monitoring instrument and a material level monitoring instrument which were respectively used for monitoring the accumulation degree of the liquefied products of the waste plastics and solid non-plastic wastes in the purging-washing tank 8, thus adjusting the charging rate of the purging-washing medium better.

In the step S1, waste plastics in the dry waste are liquefied in the first pretreatment tank 5 and subjected to liquid-solid separation to achieve the complete separation of the waste plastics and the non-plastic wastes, which provides a possible approach to achieve the green operation for converting waste plastics to oil;
in the step S2, before being transferred into the catalytic cracking reactor 7, the preheated liquefied products of the waste plastics and superheated steam passed through the mixer 12, which may not only well mix the preheated liquefied products of the waste plastics with superheated steam in the mixer 12, but also further heat up the liquefied products of the waste plastics; afterwards, the well-mixed materials were transferred to the catalytic cracking reactor 7 from the top thereof, and were well distributed on a catalyst bed in the reactor by a distributor; then, the well-mixed materials were subjected to catalytic cracking reaction and subsequent separation to obtain three streams of materials: oil-phase gasoline and diesel, gas-phase hydrocarbon gases, and an aqueous phase material; the waste incineration method embedded with a green technology for converting waste plastics to oil of the present invention is equivalent to a process combination of "zero emission". Because the waste incineration method embedded with a technology for converting waste plastics to oil not only obtain a large amount of gasoline and diesel with higher quality, but also render the concomitant gases, and even the discharged waste residue reusable in the incinerator 9; moreover, the total yield of the gasoline and diesel is 30m% of the dry waste;
in the step S3, the incineration process of the incinerator 9 has the following significant advantages: 1) plastic wastes are separated in advance and transferred to an apparatus for converting waste plastics to oil rather than transferred to the downstream incinerator 9; 2) the total emission concentration of dioxins during incineration process is lower than 0.5 ngTEQ/m³; 3) during the incineration process, the furnace temperature may be reduced to the ignition temperature of the non-plastic wastes, namely, 400-600°C, from a temperature greater than 850°C, which is a large scale of decrease in temperature; 4) the furnace temperature substantively decreases, and the capital, running and maintenance cost of the furnace, nozzle and other equipment decrease; 5) the waste plastics are not transferred to the incinerator 9, which can obviously decrease the furnace blast consumption, and reduce the dust content contained in flue gas and the concentration of acid gases to different extents; and 6) the subsequent environmental protection facilities of the incinerator 9 are simpler, and thus the capital and operating cost is lower.

The operating conditions and treatment effects of the technical solutions which are replaceable in Example 1 are shown in Table 1:

**Table 1**

| | Example 1a | Example 1b | Example 1c |
|---|---|---|---|
| Proportion of the initial waste plastics in the dry waste | 32m% | 48m% | 37m% |
| Operating conditions of the first pretreatment tank 5 | Temperature: 300°C; | Temperature: 350°C; | Temperature: 200°C; |
| | Pressure: 0.3 MPa | Pressure: 0.5 MPa | Pressure: 0.0 MPa |
| Operating conditions of the second pretreatment tank 6 | Temperature at the top of the column: 150°C; | Temperature at the top of the column: 200°C; | Temperature at the top of the column: 100°C; |
| | Pressure: 0.1 MPa; | Pressure: 0.30 MPa; | Pressure: 0.05 MPa; |
| | Temperature at the column kettle: 300°C | | Temperature at the column kettle: 250°C |
| | | Temperature at the column kettle: 320°C | |
| Operating conditions of the catalytic cracking reactor 7 | Reaction temperature: 350°C; | Reaction temperature: 500°C; | Reaction temperature: 300°C; |
| | Reaction pressure: 0.15 MPa; | | Reaction pressure: 0.05 MPa; |
| | | Reaction pressure: 0.5 MPa; | |
| | space speed: 5 h⁻¹; | | Space speed: 0.5 h1; |
| | | Space speed: 20 h1; | |
| Operating conditions of the incinerator 9 | Temperature: 500°C; | Temperature: 600°C; | Temperature: 400°C; |
| | Pressure: 0.25 MPa. | Pressure: 0.5 MPa. | Pressure: 0.01 MPa. |
| Total yield of gasoline and diesel | 25m%; | 40m%; | 28m%; |
| Total emission concentrations of dioxins | Less than 0.5 ngTEQ/m³ | Less than 0.5 ngTEQ/m³ | Less than 0.5 ngTEQ/m³ |

### Example 2

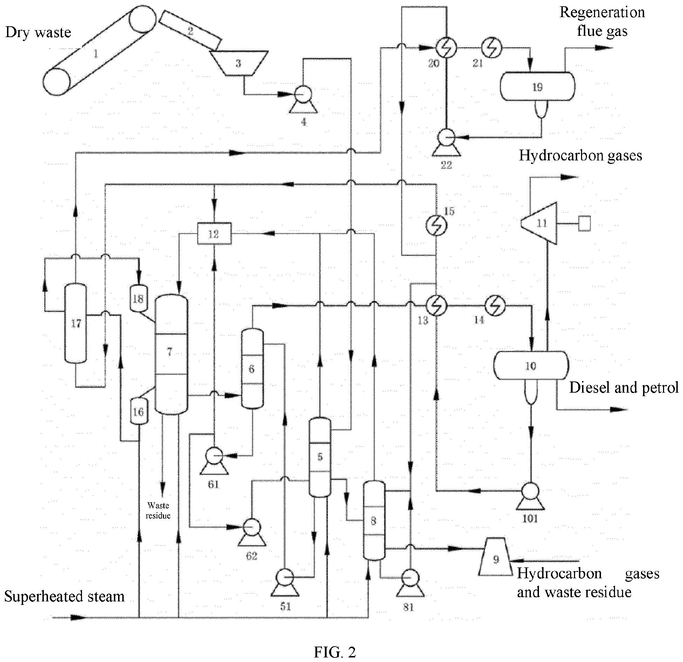

As shown in FIG. 2, the waste incineration method embedded with a green technology for converting waste plastics to oil of this example similarly included the following processing steps: S1 operations in a pretreatment unit for dry waste; S2 operations in a cracking unit for liquefied waste plastics; and S3 operations in an incineration unit for non-plastic wastes.

Example 2 differed from Example 1 in that in the step S2, the method further included a regeneration process of the catalyst, which mainly included the following steps: the catalyst, separated from the catalytic cracking reactor 7 via a catalyst-unloading line, collected into the buffer tank 16, wherein the buffer tank 16 was fed with steam for steam stripping to eliminate oil and gas carried by the catalyst; then, the catalyst was transferred to a regenerator 17, wherein an overheated medium and a suitable amount of air are fed into the regenerator 17 to convert the carbon deposited on the catalyst into CO₂ and H₂O, such that the catalyst activity was recovered gradually; the regenerated catalyst was transferred to a catalyst-loading tank 18 above the catalytic cracking reactor 7, and, after the regenerated catalyst was completely transferred, the pressure in the catalyst-loading tank 18 was increased to be higher than a pressure of 0.1-0.2 MPa in the catalytic cracking reactor 7; under the action of differential pressure and gravity, the catalyst was transferred into the catalytic cracking reactor 7 once again; the hot flue gas discharged from the top of the regenerator 17 was successively cooled by a second heat exchanger 20 and a second cooler 21, and then transferred to a two phase separator 19 for the separation of the regenerated flue gas and steam; the separated cooling water served as a cooling medium of the second heat exchanger 20 to be heat exchanged with the hot flue gas, and the regenerated flue gas was discharged directly; after being preheated, the cooling water transferred by a water pump 22 was converged to the preheated water behind a first heat exchanger 13; the two streams of preheated aqueous phase materials were heated by a heater 15 and converted into superheated steam having a temperature of 500°C, such that the aqueous phase materials were recycled. In the catalyst regeneration process of the example, the overheated medium produced during the process is used for catalytic regeneration, which not only reactivated the deactivated catalyst in the catalytic cracking reactor 7, but also made the reactivated catalyst cyclically added to the catalytic cracking reactor 7 in a temperature higher than the reaction temperature. Thus, the catalytic cracking reactor 7 was ensured to operate normally, more energy-efficiently and more efficiently.

### Example 3

The waste incineration method embedded with a green technology for converting waste plastics to oil of this example similarly included the following processing steps: S1 operations in a pretreatment unit for dry waste; S2 operations in a cracking unit for liquefied waste plastics; and S3 operations in an incineration unit for non-plastic wastes.

Example 3 differed from Example 1 in that in the step S3, the incinerator 9 worked in an indirect combustion way, and the operating conditions were as follows: the operating temperature was 550°C and the pressure was 0.2 MPa; the non-plastic wastes in the incinerator 9 were carbonized under anaerobical and high temperature conditions and converted into coke, and the coke was converted into carbon dioxide and water after combustion; and the carbonization process was performed in a mechanical grate incinerator. Superheated steam was used as a carbonization medium; the superheated steam had a temperature of 600°C and a pressure of 0.2 MPa; in the mechanical grate incinerator, the non-plastic materials were subjected to three processes of drying, evaporation and carbonization; after being carbonized, the non-plastic wastes were transferred together with slags to the incinerator 9 for incineration, and the heat released from the incineration process was used to provide energy for superheated steam; heat was required by the non-plastic wastes during carbonization, whereas the carbonized coke released heat in incineration process, maintaining a heat balance therebetween;

during the carbonization process, oxygen is insulated, and the cracking reaction of carbon is performed at high temperature; As such, combustion reaction under aerobic conditions is not performed, and thus there is no problem of insufficient combustion of non-plastic materials; furthermore, the carbonization process has the following significant advantages: 1) the quantity of dioxins produced in incineration process is further decreased; 2) the furnace temperature is sharply decreased; 3) the blast consumption is obviously decreased, and the dust content contained in the flue gas and acid gas concentration are decreased by different extents; and 4) the subsequent environmental protection facilities of the incinerator 9 are simpler, and thus the capital and operating cost is lower.

### Example 4

The waste incineration method embedded with a green technology for converting waste plastics to oil of this example similarly included the following processing steps: S1 operations in a pretreatment unit for dry waste; S2 operations in a cracking unit for liquefied waste plastics; and S3 operations in an incineration unit for non-plastic wastes.

Example 4 differed from Example 1 in that in the step S3, the incinerator 9 worked in an indirect combustion way, and the operating conditions were as follows: the operating temperature was 550°C and pressure was 0.2 MPa; the non-plastic wastes in the incinerator 9 were carbonized under anaerobical and high temperature conditions and converted into coke, and the coke was converted into carbon dioxide and water after combustion; the carbonization process was performed in a fluidized bed incinerator 9. The fluidized bed incinerator 9 was fed with a catalyst, and the non-plastic wastes and the catalyst were mixed and reacted on the fluidized bed; superheated steam and a high-temperature catalyst were used as a carbonization medium; the catalyst was a catalyst compounded by a Y type molecular sieve and a shape selective molecular sieve at a mass ratio of 5:1; the superheated steam had a temperature of 600°C and a pressure of 0.2 MPa; the high-temperature catalyst had a temperature of 550°C and the fluidized bed had a pressure of 0.2 MPa; the carbonized coke and cooled catalyst were together transferred to a regenerative fluidized bed, and the coke was combusted in the regenerative fluidized bed and converted into CO₂ and H₂O; the heat released during the combustion process heated the catalyst and superheated steam;
similarly, during the carbonization process, oxygen is insulated, and the cracking reaction of carbon is performed at high temperature; As such, combustion reaction under aerobic conditions is not performed, and thus there is no problem of insufficient combustion of non-plastic materials. Further, the carbonization process has the following significant advantages: 1) the quantity of dioxins produced in incineration process is further reduced; 2) the bed temperature of the fluidized bed incinerator 9 is sharply decreased; 3) the blast consumption is obviously decreased, and the dust content contained in the flue gas and acid gas concentration are decreased by different extents; and 4) the subsequent environmental protection facilities of the incinerator 9 are simpler, and thus the capital and operating cost is lower.

What is mentioned above displays and describes the basic principle, major features and advantages of the present invention. A person skilled in the art should understand that the present invention should be not limited by the above examples. The above examples and description are merely intended to describe the principle of the present invention. Moreover, a person skilled in the art can make various variations and improvements to the present invention within the scope of the present invention; and these variations and improvements shall fall within the scope set forth in the present invention. The protection scope of the present invention is defined by the claims attached herein.

## Claims

1. A waste incineration method embedded with a green technology for converting waste plastics to oil, wherein the waste incineration method comprises the following steps of:
S1 operations in a pretreatment unit for dry waste: after the dry waste is subjected to a shredding treatment, transferring the dry waste, obtained by separating dry and wet wastes, to an intermediate section of a first pretreatment tank (5), wherein the dry waste comprises waste plastics and non-plastic wastes; melting the waste plastics in the first pretreatment tank (5) into liquefied products by using superheated steam, and holding the non-plastic wastes in the intermediate section of the first pretreatment tank (5) in a solid form, wherein the liquefied products collect at the bottom of the tank; transferring the non-plastic wastes to a purging-washing tank (8) when the non-plastic wastes are accumulated to a certain material level, and washing the residual liquefied products on the non-plastic wastes by using steam and/or hot water; introducing the steam from both of the first pretreatment tank (5) and the purging-washing tank (8) into a catalytic cracking reactor (7) in a state of gaseous phase;
S2 operations in a cracking unit for liquefied waste plastics: pumping the liquefied products of the waste plastics obtained in the step S1 from the first pretreatment tank (5) into the second pretreatment tank (6); pumping out the liquefied products of the waste plastics obtained in the step S1 after they are preheated by a second pretreatment tank (6); mixing the pumped liquefied products of the waste plastics with superheated steam in a mixer (12) before a catalytic cracking reactor (7); and then transferring the well-mixed liquefied products of the waste plastics and superheated steam into the catalytic cracking reactor (7), wherein the liquefied products of the waste plastics are converted into a waste residue and high temperature oil and gas in the presence of a catalyst; and, cooling and separating the high temperature oil and gas to obtain oil-phase components comprising diesel and gasoline, and to produce a certain amount of hydrocarbon gases at the same time;
S3 operations in an incineration unit for non-plastic wastes: pushing the clean non-plastic wastes washed in the step S1 to an incinerator (9); and, using the concomitant hydrocarbon gases and the waste residue in the step S2 as fuels of the incinerator (9) for combustion, wherein the incinerator (9) works in a direct combustion way or an indirect combustion way.

2. The waste incineration method embedded with the green technology for converting waste plastics to oil of claim 1, wherein, in the step S1, a filter element is arranged in the intermediate section of the first pretreatment tank (5), and the main body of the first pretreatment tank (5) is further provided with an inert heating medium inlet, an inert heating medium outlet, a liquid outlet and a solid outlet, and the inert heating medium inlet and the inert heating medium outlet are respectively arranged at the bottom and top of the first pretreatment tank (5) for admission and discharge of superheated steam, and scraps of the waste plastics are heated to be melted into liquefied products, which collect at the bottom of the first pretreatment tank (5) after they are filtered by the filter element and are dischargeable from the liquid outlet, whereas the non-liquefied non-plastic wastes are held in an upper space of the filter element and transferred to the purging-washing tank (8) through the solid outlet.

3. The waste incineration method embedded with the green technology for converting waste plastics to oil of claim 1, wherein, in the step S1, the waste plastics are heated to be melted into liquefied products under the following operating conditions: the temperature is 100-300°C and the pressure is 0.01-0.5 MPa.

4. The waste incineration method embedded with the green technology for converting waste plastics to oil of claim 1, wherein, in the step S1, the non-liquefied non-plastic wastes are directly pushed to the purging-washing tank (8) to purge and wash the residual liquefied products of the waste plastics on the non-plastic wastes, and the purging-washing medium is a mixture of steam and hot water, and the washing process is cycled and repeated, wherein the hot water is from an aqueous phase material separated from a first three-phase separator (10), and the washed liquefied products of the waste plastics collect at the top of the purging-washing tank (8), and the non-plastic wastes are held in a lower middle portion of the purging-washing tank (8).

5. The waste incineration method embedded with the green technology for converting waste plastics to oil of claim 1, wherein, in the step S1, before being subjected to the shredding treatment, the dry waste is subjected to a preliminary screening treatment to a certain extent to eliminate solid wastes comprising irons, batteries, glasses, and rocks in the dry waste.

6. The waste incineration method embedded with the green technology for converting waste plastics to oil of claim 1, wherein, in the step S2, the second pretreatment tank (6) is divided into a preheating section and a desuperheating section, and the specific operating procedure for preheating the liquefied products of the waste plastics by the second pretreatment tank (6) are as follows: pumping the liquefied products of the waste plastics from the first pretreatment tank (5) into an upper portion of the preheating section of the second pretreatment tank (6) via a pump; counter-currently contacting the liquefied products of the waste plastics flowing downwardly with the high temperature oil and gas from the catalytic cracking reactor (7) in the second pretreatment tank (6) for heat exchange; after the liquefied products of the waste plastics flow through the preheating section and the desuperheating section, increasing the temperature thereof plate by plate, and increasing it to 250-320°C when the liquefied products of the waste plastics reach a column kettle; transferring a portion of the preheated liquefied products of the waste plastics into the catalytic cracking reactor (7) for catalytic cracking operation after passing through the mixer (12), whereas recycling and returning another portion of the preheated liquefied products of the waste plastics to the first pretreatment tank (5) for preheating fresh dry waste; and in the desuperheating section, the high temperature oil and gas is cooled to a saturation state from a superheat state, and at this time, dust carried by the oil and gas is washed off, and the temperature at the top of the column of the second pretreatment tank (6) is 100-200°C, the pressure at the top of the column of the second pretreatment tank (6) is 0.05-0.30 MPa, and the temperature at the column kettle is 250-320°C.

7. The waste incineration method embedded with the green technology for converting waste plastics to oil of claim 1, wherein the operating procedure of cooling and separating the high temperature oil and gas is specifically as follows: counter-currently contacting the high temperature oil and gas from the catalytic cracking reactor (7) with the liquefied products of the waste plastics in the second pretreatment tank (6) for heat exchange; discharging the heat-exchanged high temperature oil and gas from the top of the column of the second pretreatment tank (6); then, cooling the discharged high temperature oil and gas to 70-90°C by exchanging heat between the discharged high temperature oil and gas and an aqueous phase material separated from a first three-phase separator (10) in a first heat exchanger (13), and cooling the same to 30-50°C via a first cooler (14); transferring the cooled high temperature oil and gas into the first three-phase separator (10) for separation operation, respectively obtaining three streams of materials comprising oil-phase gasoline and diesel, gas-phase hydrocarbon gases, and an aqueous phase material, wherein the gas-phase hydrocarbon gases are transferred to the incinerator (9) after being pressurized by a compressor (11).

8. The waste incineration method embedded with the green technology for converting waste plastics to oil of claim 1, wherein, in the step S2, operating conditions of the catalytic cracking reactor (7) are as follows: the reaction temperature is 300-500°C, the reaction pressure is 0.05-0.5 MPa, and the space speed is 0.1-20 h⁻¹.

9. The waste incineration method embedded with the green technology for converting waste plastics to oil of claim 1, wherein, in the step S3, the washed non-plastic wastes are directly pushed to the incinerator (9) by the purging-washing tank (8), and the discharging way is pushing by an airtight pipeline, and the purging-washing tank (8) is provided with a liquid level monitoring instrument and a material level monitoring instrument.

10. The waste incineration method embedded with the green technology for converting waste plastics to oil of claim 1, wherein, in the step S3, operating conditions of the incinerator (9) working in the direct combustion way are as follows: the operating temperature is an ignition temperature of the dry refuse, namely, 400-600°C, and the pressure is 0.01-0.5 MPa, and oxygen is fed into the incinerator (9), and the non-plastic wastes are completely incinerated and converted into carbon dioxide and water to discharge.

11. The waste incineration method embedded with the green technology for converting waste plastics to oil of claim 1, wherein, in the step S3, operating conditions of the incinerator (9) working in the indirect combustion way are as follows: the operating temperature is 400-650°C and pressure is 0.1-0.5 MPa, and the non-plastic wastes in the incinerator (9) are carbonized under anaerobical and high temperature conditions and converted into coke, which is converted into carbon dioxide and water after combustion, and the carbonization process is performed in a mechanical grate incinerator or a fluidized bed incinerator.

12. The waste incineration method embedded with the green technology for converting waste plastics to oil of claim 1, wherein, in the step S2, the method further comprises a regeneration process of the catalyst, which mainly comprises the following steps of: separating the catalyst from the catalytic cracking reactor (7) via a catalyst-unloading line, wherein the catalyst collects into the buffer tank (16), and the buffer tank (16) is fed with steam for steam stripping to eliminate oil and gas carried by the catalyst; then, transferring the catalyst to a regenerator (17), wherein an overheated medium and a suitable amount of air are fed into the regenerator (17) to convert the carbon deposited on the catalyst into CO₂ and H₂O, such that the activity of the catalyst is recovered gradually; transferring the regenerated catalyst to a catalyst-loading tank (18) above the catalytic cracking reactor (7), and, after the regenerated catalyst is transferred completely, increasing the pressure in the catalyst-loading tank (18) to be higher than a pressure of 0.1-0.2 MPa in the catalytic cracking reactor (7), wherein, under the action of differential pressure and gravity, the catalyst is transferred into the catalytic cracking reactor (7) once again.

## Patentansprüche

1. Eine im Umfang grüner Technologie eingeschlossene Müllverbrennungsmethode zur Umwandlung von Abfallkunststoffmaterial in Öl, wobei die Müllverbrennungsmethode folgende Schritte umfasst:
S1 Verarbeitung in einer Vorbehandlungseinheit für trockenen Abfall: nach Verarbeitung des trockenen Abfalls in einem Zerkleinerungsverfahren, Weiterleitung des durch Trennen des trockenen Abfalls (Fraktion) und nassen Abfalls erhaltenen trockenen Abfalls zu einem Zwischenabschnitt eines ersten Vorbehandlungtanks (5), wobei der trockene Abfall trockenes Abfallkunststoffmaterial und nicht aus Kunststoff bestehende Abfälle umfasst;
Schmelzen des Abfallkunststoffmaterials im ersten Vorbehandlungtank (5) zum Erhalt von verflüssigten Produkten mittels Anwendung von überhitztem Dampf, und Zurückhalten des Nicht aus Kunststoff bestehende Abfälles im Zwischenabschnitt des ersten Vorbehandlungtanks (5) als Festkörper, wobei die verflüssigten Produkte sich am Tankboden ansammeln; Weiterleiten der nicht aus Kunststoff bestehenden Abfälle zu einem Reinigungswaschtank (8), wenn die nicht aus Kunststoff bestehenden Abfälle sich bis zu einem bestimmten Niveau angesammelt haben, und Waschen der restlichen, verflüssigten Produkte an nicht aus Kunststoff bestehenden Abfällen unter Anwendung von Dampf und/oder heissem Wasser, wobei der Dampf sowohl vom ersten Vorbehandlungstank (5) als auch vom Reinigungswaschtank (8) in einen katalytischen Krackreaktor (7) im Gasphasenzustand eingeführt wird;
S2 Verarbeitung in einer Krackeinheit für verflüssigte Kunststoffabfälle, Pumpen der verflüssigten Produkte der in Schritt S1 erhaltenen Kunststoffabfälle ab dem ersten Vorbehandlungstank (5) hin zum zweiten Vorbehandlungstank (6); Abpumpen der verflüssigten Produkte aus den in Schritt S1 erhaltenen Kunststoffabfällen, nachdem diese in einem zweiten Vorbehandlungstank (6) vorgeheizt wurden; Mischen der verflüssigten, mittels einer Pumpe weitergeleiteten Produkte von Kunststoffabfällen mit überhitzten Dampf in einem Mischwerk (12) vor einem katalytischen Krackreaktor (7); und danach Weiterleiten der gut gemischten, verflüssigten Produkte von Kunststoffabfällen und überhitztem Dampf in den katalytischen Krackreaktor (7), wobei die verflüssigten Produkte der Kunststoffabfälle in einen Abfallrückstand sowie Hochtemperaturöl und -gas in Gegenwart eines Katalysators umgewandelt werden; und Abkühlen sowie Trennen des Hochtemperaturöls und -gases zwecks Erhalt von Ölphasenkomponenten, die Diesel und Benzin umfassen, und um gleichzeitig eine gewisse Menge an Kohlenwasserstoffgasen zu produzieren;
S3 Verarbeitung in einer Verbrennungseinheit für nicht aus Kunststoff bestehenden Abfälle: Schieben der gereinigten, in Schritt S1 gewaschenen nicht aus Kunstoff bestehenden Abfälle zu einer Verbrennungsanlage (9); und Benutzen der begleitenden Kohlenwasserstoffgase und der Kunststoffabfallreste von Schritt S2 als Brennstoff für die Verbrennungsanlage (9) zur Verbrennung, wobei die Verbrennungsanlage (9) in Direktverbrennungsweise oder Indirekteverbrennungsweise arbeitet.

2. Die im Umfang grüner Technologie eingeschlossene Müllverbrennungsmethode zur Umwandlung von Abfallkunststoffmaterial in Öl gemäss Anspruch 1, bei der im Schritt S1 im Zwischenabschnitt des ersten Vorbehandlungstank (5) ein Filterelement angeordnet ist, und der Hauptkörper des ersten Vorbehandlungstanks (5) weiter mit einem Eintritt für das inerte Heizmedium, einem Austritt für das inerte Heizmedium, einem Austritt für Flüssigkeiten und einem Austritt für Feststoffe versehen ist, wobei der Eintritt für das inerte Heizmedium und der Austritt für das inerte Heizmedium jeweils am Boden und am Oberteil des ersten Vorbehandlungstanks (5) für den Eintritt und Austritt von überhitztem Dampf versehen ist, und Fragmente des Kunststoffabfalls bis zum Schmelzen und Erhalt von Flüssigprodukten aufgeheizt werden, Flüssigprodukte, die am Boden des ersten Vorbehandlungstank (5) gesammelt werden, nachdem sie mittels des Filterelements gefiltert wurden und über den Austritt für Flüssigkeiten abgelassen werden können, wobei die nicht verflüssigten, nicht Kunststoff enthaltenen Rückstände im Raum über dem Filter zurückgehalten und zum Reinigungswaschtank (8) durch den Austritt für Feststoffe geleitet werden.

3. Die im Umfang grüner Technologie eingeschlossene Müllverbrennungsmethode zur Umwandlung von Abfallkunststoffmaterial in Öl gemäss Anspruch 1, bei der im Schritt S1 der Kunststoffabfall zum Schmelzen in Flüssigprodukte erwärmt wird und zwar unter folgenden Betriebsbedingungen: die Temperatur beträgt 100-300 ºC und der Druck 0,01-0,5 MPa.

4. Die im Umfang grüner Technologie eingeschlossene Müllverbrennungsmethode zur Umwandlung von Abfallkunststoffmaterial in Öl gemäss Anspruch 1, bei der im Schritt S1 die nicht verflüssigten, nicht aus Kunststoff bestehenden Abfälle direkt zum Reinigungswaschtank (8) geschoben werden, um die restlichen, verflüssigten Produkte der Kunststoffabfälle auf den nicht aus Kunststoff bestehenden Abfällen zu entfernen und abzuwaschen, und das Reinigungs-Waschmittel eine Mischung von heissem Dampf und heissem Wasser ist, und wobei das Waschverfahren zyklisch und wiederholt durchgeführt wird, wobei das heisse Wasser von einem Material in wässriger Phase ist, das von einem ersten Dreiphasenseparator (10) getrennt wird, und wobei die gewaschenen, verflüssigten Produkte des Kunststoffabfalls am oberen Teil des Reinigungswaschtanks (8) gesammelt werden, und die nicht aus Kunststoff bestehenden Abfälle in einer unteren Mitte des Reinigungswaschtanks (8) zurückgehalten werden.

5. Die im Umfang grüner Technologie eingeschlossene Müllverbrennungsmethode zur Umwandlung von Abfallkunststoffmaterial in Öl gemäss Anspruch 1, bei der im Schritt S1 vor Anwendung der Zerkleinerungsbehandlung der Trockenabfall einem bis zu einem gewissen Mass vorläufigen Siebverfahren unterworfen wird, um Feststoffabfälle zu eliminieren, die Eisen-, Batterie-, Glas- und Steinrückstände umfassen.

6. Die im Umfang grüner Technologie eingeschlossene Müllverbrennungsmethode zur Umwandlung von Abfallkunststoffmaterial in Öl gemäss Anspruch 1, bei der in Schritt S2 der zweite Vorbehandlungstank (6) aufgeteilt ist in einen Vorwärmabschnitt und einem Abschnitt für Abführen der Überhitzungswärme, und das spezifische Arbeitsverfahren zum Vorwärmen der verflüssigten Produkte der Kunststoffabfälle durch den zweiten Vorbehandlungstank (6) wie folgt ist: Pumpen der verflüssigten Produkte aus den Kunststoffabfällen ab dem ersten Vorbehandlungstank (5) in einen oberen Teil des Vorwärmungsabschnittes des zweiten Vorbehandlungstanks (6) über eine Pumpe; gegenstromweises Kontaktieren der verflüssigten Produkte der Kunststoffabfälle, die zusammen mit dem Hochtemperaturöl und -gas aus dem katalytischen Krackreaktor (7) in den zweiten Vorbehandlungstank (6) zwecks Wärmeaustausch nach unten fliessen; wobei, nachdem die verflüssigten Produkte der Kunststoffabfälle durch den Vorwärmungsabschnitt und den Abschnitt für Abführen der Überhitzungswärme geflossen sind, die entsprechende Temperatur Platte für Platte bis zu 250-320 ºC erhöht wird, wenn die verflüssigten Produkte der Kunststoffabfälle einen Säulenkessel erreichen; nachdem sie durch einen Mixer (12) geleitet wurden, Weiterleiten eines Teils der vorgewärmten, verflüssigten Produkte der Kunststoffabfälle zum katalytischen Krackreaktor (7) für die katalytische Krackbehandlung, während ein anderer Teil der vorgewärmten, verflüssigten Produkte der Kunststoffabfälle zum ersten Vorbehandlungstank (5) zurückgeführt wurde, zwecks Vorwärmen von neuem Trockenabfall; und wobei im Abschnitt für Abführen der Überhitzungswärme das Hochtemperaturöl und -gas bis zu einem Sättigungszustand ab dem überhitzten Zustand abgekühlt wird, wobei zu diesen Zeitpunkt der durch das Öl und das Gas mitgeschleppte Staub weggewaschen wird, und die Temperatur an der Spitze der Säule des zweiten Vorbehandlungstanks (6) 100-200ºC erreicht hat, der Druck an der Spitze der Säule des zweiten Vorbehandlungstanks (6) 0,05-0,30 MPa ist und die Temperatur am Säulenkessel 250-320ºC beträgt.

7. Die im Umfang grüner Technologie eingeschlossene Müllverbrennungsmethode zur Umwandlung von Abfallkunststoffmaterial in Öl gemäss Anspruch 1, bei der das Arbeitsverfahren von Kühlen und Trennen des Hochtemperaturöls und -gases spezifisch wie folgt ist: gegenstromweises Kontaktieren des Hochtemperaturöls und -gases vom katalytischen Krackreactor (7) mit den verflüssigten Produkten des Kunststoffsabfalls im zweiten Vorbehandlungstank (6) zwecks Wärmeaustausch; Ablassen des Hochtemperaturöls und -gases nach dem Wärmeaustausch aus dem oberen Teil der Säule des zweiten Vorbehandlungtanks (6); danach Abkühlen des abgelassenen Hochtemperaturöls und -gases auf 70-90ºC durch Wärmeaustausch zwischen dem Hochtemperaturöl und -gas und einem Material in wässriger Phase, das von einem ersten dreiphasigen Trenner (10) in einem ersten Wärmeaustauscher (13) getrennt wurde, und Abkühlen desselben bis auf 30-50ºC über einen ersten Kühler (14); Weiterleiten des abgekühlten Hochtemperaturöls und -gases in den ersten dreiphasigen Trenner (10) für den Trennvorgang, wobei respektiv drei Materialströme erhalten werden, die Ölphasenbenzin und -diesel, Gasphasen-Kohlenwasserstoffgase und ein Material in wässriger Phase umfassen, wobei die Gasphasen-Kohlenwasserstoffgase nach Unterdrucksetzen durch einen Kompressor (11) zum Verbrennungsofen (9) geleitet werden.

8. Die im Umfang grüner Technologie eingeschlossene Müllverbrennungsmethode zur Umwandlung von Abfallkunststoffmaterial in Öl gemäss Anspruch 1, bei der im Schritt S2 die Betriebsbedingungen des katalytischen Krackreactors (7) wie folgt sind: die Reaktionstemperatur 300-500ºC beträgt, der Reaktionsdruck 0,05-0,5 MPa ist und die Raumgeschwindigkeit i0,1-20 h⁻¹ beträgt.

9. Die im Umfang grüner Technologie eingeschlossene Müllverbrennungsmethode zur Umwandlung von Abfallkunststoffmaterial in Öl gemäss Anspruch 1, bei der in Schritt S3 die gewaschenen nicht Kunststoff enthaltenen Abfälle direkt zur Verbrennungsanlage (9) durch den Reinigungs- und waschtank (8) geschoben werden, und die Entladeweise in einem Schieben durch eine luftdichte Rohrleitung besteht, und der Reinigungs- und waschtank (8) mit einem Kontrollinstrument für den Flüssigkeitsspiegel und einem Kontrollinstrument für den Materialfüllstand versehen ist.

10. Die im Umfang grüner Technologie eingeschlossene Müllverbrennungsmethode zur Umwandlung von Abfallkunststoffmaterial in Öl gemäss Anspruch 1, bei der in Schritt S3 die Betriebsbedingungen der Verbrennungsanlage (9) mit Direktverbrennung wie folgt sind: die Betriebstemperatur ist eine Zündungstemperatur des Trockenabfalls, d.h. 400-600ºC und der Druck beträgt 0,01-0,5 MPa, und der Verbrenner (9) wird mit Sauerstoff versorgt, und der Nicht aus Kunststoff bestehende Abfälle wird komplett verbrannt und zwecks Abführen in Kohlendioxid und Wasser umgewandelt.

11. Die im Umfang grüner Technologie eingeschlossene Müllverbrennungsmethode zur Umwandlung von Abfallkunststoffmaterial in Öl gemäss Anspruch 1, bei der im Schritt S3 die Betriebsbedingungen der Verbrennungsanlage (9) mit indirekter Verbrennungsweise folgende sind: die Arbeitstemperatur ist 400-650º C und der Druck beträgt 0,1-0,5 Mpa, und die nicht aus Kunststoff bestehenden Abfälle in der Verbrennungsanlage (9) werden unter anaeroben und Hochtemperaturbedingungen verkohlt und in Koks umgewandelt, der nach Verbrennung in Kohlendioxid und Wasser umgewandelt wird, und das Verkohlungsverfahren wird in einer mechanischen Rostofenanlage oder einem Wirbelschichtverbrenner durchgeführt.

12. Die im Umfang grüner Technologie eingeschlossene Müllverbrennungsmethode zur Umwandlung von Abfallkunststoffmaterial in Öl gemäss Anspruch 1, bei der in Schritt S2 die Methode weiter ein Regenerierungsverfahren des Katalysators umfasst, das hauptsächlich folgende Schritte umfasst: Trennen des Katalysators vom katalytischen Krackreactors (7) über eine Entladelinie des Katalysators, wobei der Katalysator im Puffertank (16) angesammelt wird und der Puffertank (16) mit Dampf zwecks Dampfstrippen versorgt wird, um das Öl und das Gas zu eliminieren, die durch den Katalysator mitgeführt wurden; danach Weiterleiten des Katalysators zu einem Regenerator (17), wobei ein überhitztes Medium und eine passende Menge an Luft dem Regenerator (17) zugeführt werden, um den auf dem Katalysator abgesetzten Kohlenstoff in CO₂ und H₂O umzuwandeln, so dass die Aktivität des Katalysators nach und nach wiedergewonnen wird; Weiterleiten des regenerierten Katalysators zu einem Katalysatorladetank (18) über dem katalystischen Krackreaktor (7) und, nachdem der regenerierte Katalysator komplett weitergeleitet wurde, Erhöhung des Drucks im Katalysatorladetank (18) zwecks Erhalt eines Druckes von über 0,1-0,2 MPa im katalystischen Krackreaktors (7), wobei unter der Wirkung des Differenzdrucks und der Schwerkraft der Katalysator erneut in einen katalystischen Krackreaktor (7) weitergeleitet wird.

## Revendications

1. Méthode d'incinération des déchets intégrant une technologie verte pour convertir les déchets plastiques en pétrole, dans laquelle la méthode d'incinération des déchets comprend les étapes suivantes:
S1: opérations effectuées dans une unité de prétraitement pour les déchets secs: après que les déchets secs ont été soumis à un traitement de broyage, les déchets secs, obtenus par séparation des déchets secs et humides, sont transférés vers une section intermédiaire du premier réservoir de prétraitement (5), les déchets secs étant constitués de déchets plastiques et de déchets non plastiques; fusion des déchets plastiques dans le premier réservoir de prétraitement (5) pour obtenir des produits liquéfiés en utilisant de la vapeur surchauffée, et maintien des déchets non plastiques dans la section intermédiaire du premier réservoir de prétraitement (5) sous une forme solide, alors que les produits liquéfiés s'accumulent au fond du réservoir; transfert des déchets non plastiques dans un réservoir de lavage par purge (8) lorsque les déchets non plastiques sont accumulés jusqu'à un certain niveau de matière, et lavage des produits liquéfiés résiduels sur les déchets non plastiques en utilisant de la vapeur et/ou d'eau chaude; introduction de la vapeur provenant du premier réservoir de prétraitement (5) et du réservoir de lavage par purge (8) dans un réacteur de craquage catalytique (7) à l'état de phase gazeuse;
S2: opérations effectuées dans une unité de craquage de déchets plastiques liquéfiés: pompage des produits liquéfiés des déchets plastiques obtenus à l'étape S1 depuis le premier réservoir de prétraitement (5) vers le deuxième réservoir de prétraitement (6); pompage des produits liquéfiés des déchets plastiques obtenus à l'étape S1 après leur préchauffage par un deuxième réservoir de prétraitement (6); mélange des produits liquéfiés pompés des déchets plastiques avec de la vapeur surchauffée dans un mélangeur (12) avant un réacteur de craquage catalytique (7); et transfert des produits liquéfiés bien mélangés des déchets plastiques et de la vapeur surchauffée dans le réacteur de craquage catalytique (7), où les produits liquéfiés des déchets plastiques sont convertis en un résidu de déchets et en pétrole et gaz à haute température en présence d'un catalyseur; et refroidissement et séparation du pétrole et du gaz à haute température pour obtenir des composants en phase pétroleuse comprenant du diesel et de l'essence, et pour produire en même temps une certaine quantité d'hydrocarbures gazeux;
S3: opérations effectuées dans une unité d'incinération de déchets non plastiques: envoi des déchets non plastiques nettoyés, lavés à l'étape S1 vers un incinérateur (9); et utilisation des gaz d'hydrocarbures concomitants et des résidus de déchets de l'étape S2 comme combustibles de l'incinérateur (9) pour la combustion, où l'incinérateur (9) fonctionne selon un mode de combustion directe ou de combustion indirecte.

2. La méthode d'incinération des déchets intégrant la technologie verte pour la conversion des déchets plastiques en pétrole selon la revendication 1, où, dans l'étape S1, un élément filtrant est disposé dans la section intermédiaire du premier réservoir de prétraitement (5), et le corps principal du premier réservoir de prétraitement (5) est en outre pourvu d'une entrée pour le milieu de chauffage inerte, d'une sortie pour le milieu de chauffage inerte, d'une sortie pour les liquides et d'une sortie pour les matières solides, et l'entrée du milieu de chauffage inerte et la sortie du milieu de chauffage inerte sont respectivement disposées au fond et à la partie supérieure du premier réservoir de prétraitement (5) pour l'admission et l'évacuation de la vapeur surchauffée, et les déchets de matières plastiques sont chauffés pour être fondus et obtenir produits liquéfiés; ceux-ci sont recueillis au fond du premier réservoir de prétraitement (5) après avoir été filtrés au moyen de l'élément filtrant, et peuvent être évacués à travers la sortie pour les liquides, tandis que les déchets non plastiques non liquéfiés sont retenus dans un espace supérieur de l'élément filtrant et transférés vers le réservoir de purge et de lavage (8) à travers la sortie pour les matières solides.

3. La méthode d'incinération des déchets intégrant la technologie verte de conversion des déchets plastiques en pétrole selon la revendication 1, où, dans l'étape S1, les déchets plastiques sont chauffés pour être fondus en produits liquéfiés dans les conditions de fonctionnement suivantes: la température est de 100 à 300°C et la pression est de 0,01 à 0,5 MPa.

4. La méthode d'incinération des déchets intégrant la technologie verte de conversion des déchets plastiques en pétrole selon la revendication 1, où, à l'étape S1, les déchets non plastiques non liquéfiés sont directement transférés dans le réservoir de purge-lavage (8) pour purger et laver les produits liquéfiés résiduels des déchets plastiques sur les déchets non plastiques, le milieu de purge-lavage étant un mélange de vapeur d'eau et d'eau chaude, et le processus de lavage est cyclique et répété, dans lequel l'eau chaude provient d'un matériau en phase aqueuse séparé d'un premier séparateur à trois phases (10), les produits liquéfiés lavés des déchets plastiques sont collectés à la partie supérieure du réservoir de purge-lavage (8), et les déchets non plastiques sont retenus dans une partie centrale inférieure du réservoir de purge-lavage (8).

5. La méthode d'incinération des déchets intégrant la technologie verte de conversion des déchets plastiques en pétrole selon la revendication 1, où, à l'étape S1, avant d'être soumis au traitement de broyage, les déchets secs sont soumis dans une certaine mesure à un traitement de criblage préliminaire afin d'éliminer les déchets solides comprenant des fers, des batteries, des verres et des roches contenus dans les déchets secs.

6. La méthode d'incinération des déchets intégrant la technologie verte de conversion des déchets plastiques en pétrole selon la revendication 1, où, dans l'étape S2, le deuxième réservoir de prétraitement (6) est divisé en une section de préchauffage une section d'évacuation de la chaleur de surchauffe, et la procédure opérationnelle spécifique pour le préchauffage des produits liquéfiés des déchets plastiques par le second réservoir de prétraitement (6) est la suivante: pompage des produits liquéfiés des déchets plastiques du premier réservoir de prétraitement (5) dans une partie supérieure de la section de préchauffage du deuxième réservoir de prétraitement (6) au moyen d'une pompe; mise en contact à contre-courant des produits liquéfiés des déchets plastiques s'écoulant vers le bas avec le pétrole et le gaz à haute température provenant du réacteur de craquage catalytique (7) dans le deuxième réservoir de prétraitement (6) pour l'échange de chaleur; après que les produits liquéfiés des déchets plastiques ont traversé la section de préchauffage et la section d'évacuation de la chaleur de surchauffe, leur température est augmentée plaque par plaque jusqu'à ce que cette température atteigne un niveau de 250 à 320° C lorsque les produits liquéfiés des déchets plastiques atteignent une bouilloire à colonne; une partie des produits liquéfiés préchauffés des déchets plastiques est envoyée au réacteur de craquage catalytique (7) pour l'opération de craquage catalytique après leur passage à travers le mélangeur (12), tout en recyclant et en renvoyant une autre partie des produits liquéfiés préchauffés des déchets plastiques vers le premier réservoir de prétraitement (5) pour le préchauffage des déchets frais et secs ; et dans la section d'évacuation de la chaleur de surchauffe, le pétrole et le gaz à haute température sont refroidis jusqu'à un état de saturation à partir de l'état surchauffé, et à ce moment, la poussière transportée par le pétrole et le gaz est lavée, et la température au sommet de la colonne du deuxième réservoir de prétraitement (6) est de 100 à 200° C, la pression au sommet de la colonne du deuxième réservoir de prétraitement (6) est de 0,05 à 0,30 MPa, et la température dans la bouilloire de la colonne est de 250 à 320° C.

7. La méthode d'incinération des déchets intégrant la technologie verte de conversion des déchets plastiques en pétrole selon la revendication 1, dans laquelle le procédé de refroidissement et de séparation du pétrole et du gaz à haute température est spécifiquement le suivant: mise en contact à contre-courant de pétrole et de gaz à haute température provenant du réacteur de craquage catalytique (7) avec les produits liquéfiés des déchets plastiques dans le deuxième réservoir de prétraitement (6) pour l'échange de chaleur; évacuation du pétrole et du gaz à haute température après l'échange de chaleur de la partie supérieure de la colonne du deuxième réservoir de prétraitement (6); refroidissement du pétrole et du gaz à haute température évacués jusqu'à 70 à 90° C par un échange de chaleur entre le pétrole et le gaz à haute température évacués et une matière en phase aqueuse séparée par un premier séparateur à trois phases (10) dans un premier échangeur de chaleur (13), et refroidissement jusqu'à 30 à 50º C par l'intermédiaire d'un premier refroidisseur (14); transfert du pétrole et du gaz à haute température refroidis dans le premier séparateur à trois phases (10) pour l'opération de séparation, en obtenant respectivement trois flux de matériaux comprenant de l'essence et du diesel en phase huileuse, des gaz d'hydrocarbures en phase gazeuse et un matériau en phase aqueuse, où les gaz d'hydrocarbures en phase gazeuse sont transférés à l'incinérateur (9) après avoir été pressurisés par un compresseur (11).

8. La méthode d'incinération des déchets intégrant la technologie verte de conversion des déchets plastiques en pétrole selon la revendication 1, où, à l'étape S2, les conditions de fonctionnement du réacteur de craquage catalytique (7) sont les suivantes: la température de réaction est comprise entre 300 et 500° C, la pression de réaction est comprise entre 0,05 et 0,5 MPa, et la vitesse spatiale est comprise entre 0,1 et 20 h⁻¹.

9. La méthode d'incinération des déchets intégrant la technologie verte de conversion des déchets plastiques en pétrole selon la revendication 1, où, dans l'étape S3, les déchets non plastiques lavés sont directement envoyés vers l'incinérateur (9) à travers le réservoir de purge-lavage (8), et le mode de déchargement consiste à pousser à travers un pipeline étanche à l'air, et le réservoir de purge-lavage (8) est équipé d'un instrument de surveillance du niveau de liquide et d'un instrument de surveillance du niveau de matériau.

10. La méthode d'incinération des déchets intégrant la technologie verte de conversion des déchets plastiques en pétrole selon la revendication 1, où, à l'étape S3, les conditions de fonctionnement de l'incinérateur (9) opérant par combustion directe sont les suivantes: la température de fonctionnement est une température de combustion des déchets secs, à savoir 400 à 600° C, la pression est de 0,01 à 0,5 MPa, on fait entrer de l'oxygène dans l'incinérateur (9), et les déchets non plastiques sont complètement incinérés et convertis en dioxyde de carbone et en eau pour être évacués.

11. La méthode d'incinération des déchets intégrant la technologie verte de conversion des déchets plastiques en pétrole selon la revendication 1, où, à l'étape S3, les conditions de fonctionnement de l'incinérateur (9) opérant par combustion indirecte sont les suivantes: la température de fonctionnement est de 400 à 650° C, la pression est de 0,1-0,5 MPa, les déchets non plastiques contenus dans l'incinérateur (9) sont carbonisés dans des conditions anaérobies et à haute température et transformés en coke, lequel est converti en dioxyde de carbone et en eau après la combustion, et le processus de carbonisation est réalisé dans un incinérateur à grille mécanique ou dans un incinérateur à lit fluidisé.

12. La méthode d'incinération des déchets intégrant la technologie verte de conversion des déchets plastiques en pétrole selon la revendication 1, où, à l'étape S2, la méthode comprend en outre un processus de régénération du catalyseur, qui comprend principalement les étapes suivantes: séparation du catalyseur du réacteur de craquage catalytique (7) via une ligne de déchargement du catalyseur, le catalyseur étant accumulé dans le réservoir intermédiaire (16), et le réservoir intermédiaire (16) est alimenté en vapeur pour le décapage par vapeur afin d'éliminer le pétrole et le gaz transportés par le catalyseur; ensuite, transfert du catalyseur vers un régénérateur (17), dans lequel un milieu surchauffé et une quantité appropriée d'air sont introduits dans le régénérateur (17) pour convertir le carbone déposé sur le catalyseur en CO₂ et H₂O, de sorte que l'activité du catalyseur est récupérée graduellement ; transfert du catalyseur régénéré dans un réservoir de chargement du catalyseur (18) situé au-dessus du réacteur de craquage catalytique (7) et, et une fois que le catalyseur régénéré a été complètement transféré, la pression dans le réservoir de chargement du catalyseur (18) est augmentée jusqu'à ce qu'elle dépasse une pression de 0,1-0,2 MPa dans le réacteur de craquage catalytique (7), dans lequel, sous l'action de la pression différentielle et de la gravité, le catalyseur est à nouveau transféré dans le réacteur de craquage catalytique (7).
